# EUROPEAN PATENT APPLICATION

(11) **EP 4 398 045 A1**
(43) Date of publication of application: **10.07.2024**
(21) Application number: 23214519.3
(22) Date of filing: 06.12.2023
(51) Int. Cl.: G03H 1/30, G03H 1/08, G02B 27/01, G03H 1/22

(54) **HOLOGRAPHIC PROJECTOR**

(30) Priority: 06.01.2023 GB 202300203
(71) Applicant: Envisics Ltd, Milton Keynes MK1 1PT (GB)
(72) Inventor: LIN, Ruisheng, Milton Keynes, MK1 1PT (GB); CHRISTMAS, Jamieson, Milton Keynes, MK1 1PT (GB); SMEETON, Timothy, Milton Keynes, MK1 1PT (GB)
(74) Representative: Greenaway, Martin William

(57) **Abstract**

A holographic projector is provided comprising a display device arranged to form a holographic wavefront by spatially modulating light in accordance with a hologram displayed thereon, and a waveguide having an input arranged to receive the holographic wavefront, and a first surface and a second surface arranged to waveguide the holographic wavefront therebetween, wherein the first surface is partially reflective-transmissive such that a plurality of replicas of the holographic wavefront are emitted therefrom. A size of the hologram is less than a size of an entrance pupil of a viewing system for receiving the holographic wavefront from the first surface of the waveguide and the hologram comprises a first sub-hologram of a first region of an image adjoined to a second sub-hologram of a second region of the image.

## Description

### FIELD

The present disclosure relates to an image projection system and a method of image projection. More specifically, the present disclosure relates to a holographic projector and methods that reduce the occurrence of ghost images. Yet further specifically, the present disclosure relates to a display control for a hologram display device of a holographic projector, wherein the display control is arranged to partition the pixels of the display device in order to reduce or prevent replica holographic content reaching a or each viewing position of a viewing area or volume. Some embodiments relate to a hologram generating unit, picture generating unit or head-up display.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

In overview, a holographic projection system and methods are provided that avoid, or at least reduce, the occurrence of ghost images, when an image (i.e., a holographic reconstruction) is formed by the holographic projection system. The holographic projection system includes a display device and a waveguide. The display device is arranged to spatially modulate light in accordance with a hologram displayed thereon. The waveguide is arranged to receive a holographic wavefront modulated in accordance with the hologram and output a plurality of replicas of the holographic wavefront. The system and methods are particularly applicable to holographic reconstructions formed at non-infinite image distances and / or to when the size of an aperture of a viewing system, that is to view the image, is of a similar size to the display device on which the hologram is displayed.

The background to the present disclosure is described in British patent GB2,603,517 which is incorporated herein in full by reference. In overview, the aperture/pupil of a display device limits the size of a viewing window (e.g. eye-box). A waveguide may be used to form an expanded (increased size) viewing window by creating and emitting a plurality of replicas of the pupil. Each waveguide generates a plurality of replicas of a holographic wavefront formed by illuminating a hologram displayed on the display device. It may be said for short that each waveguide generates a plurality of replicas of the hologram. A problem with ghost images was addressed in British patent, GB2,603,517. The solution was based on the recognition that different replicas provided the main image content and the ghost image content (in the hologram domain).

The present disclosure describes an alternative solution to the problem of ghost images formed by the waveguide. The approach disclosed herein provides benefits regarding the hologram algorithm. By way of example only, the approach disclosed herein is particularly effective with holograms wherein a characteristic of the hologram (e.g. number of pixels or size/shape of the pixel array) is substantially the same as that of the corresponding image it reconstructs. An example of such a hologram is one formed by an iterative phase retrieval algorithm such as that described in British patent application GB2112213.0 which is incorporated herein in full by reference. However, the present disclosure is not limited to such holograms and other holograms may benefit from the concepts disclosed herein.

The inventors firstly identified that the likelihood of light of a ghost image passing through the aperture of the viewing system was reduced if the separation between the hologram replicas was increased. The inventors recognised that this could be achieved if the hologram were only displayed on a sub-area of the display device (having a pupil that is replicated by the waveguide). However, the inventors found in simulation and experiment that whilst this approach was indeed effective at reducing the prominence of ghost images, a new problem of dark bands (missing image content) in the field of view was introduced. A problem addressed by the present inventors was therefore how to reduce the likelihood of ghosts without degrading image quality. More specifically, how to reduce the likelihood of ghosts by separating the hologram replicas without introducing dark bands in the field of view. These issues are described further in the following paragraphs.

So-called "ghost images" can be formed at non-infinite image distances owing to there being different possible light propagation paths through the waveguide. In particular, the light propagation paths associated with different replicas of the holographic wavefront may have different lengths. Different light propagation paths may also originate from different areas of the spatial light modulator. In any given position, a viewing system may receive the same image content from multiple replicas of the holographic wavefront. This may result in a main image being associated with a first region of a first replica and a second, ghost, image being associated with a second region of a second replica. In one example, at a first viewing position, a first portion of the display device may contribute to the main image. Light from the first portion may be received at a viewing system via a first replica. A second portion of the display device may contribute to the ghost image. Light from the second portion and may be received at the viewing system via a second replica. At non-infinite image distances, the main (primary) image and ghost (secondary) image may partially overlap. This partial overlap can significantly reduce the quality of a perceived virtual image. The ghost images may give the appearance of blurring of the primary (main) image.

The disclosed system and methods avoid or at least reduce the occurrence of ghost images by (i) dividing the field of view (target image) into spatial areas (referred to herein as "portions"), (ii) calculating a smaller (fewer pixels than the target image) hologram (referred to herein as "sub-holograms") of each portion and (iii) displaying each sub-hologram on a different sub-area of the display device. Effectively, this approach involves reducing the area of the display device that is encoded with a particular (sub) hologram. Reducing the area of the display device that is encoded with a particular (first sub-) hologram substantially reduces the likelihood of light encoded with the same (sub) hologram (or the same portion of the hologram) being received from multiple replicas of the spatial light modulator, at an aperture of the viewing system, which may comprise a human eye. This therefore reduces the likelihood of the light of the same image content being received more than once at a given viewing position, by the aperture. This is achieved by only displaying the hologram pixels corresponding to that image content on some of the available display pixels - for example, on one half or one third, or one quarter of the available display pixels. In particular, a (first sub-) hologram corresponding to particular image content may be displayed on a contiguous group of pixels comprising some (and not all) of the available display pixels. In other words, the (first sub-) hologram may not fill a display area of the display device and may fill less than half or less than one third or less than one quarter of the available display area. The inventors have found that underfilling the display device with each sub-hologram substantially increases the chances of a viewing system, in a first position, receiving content of the sub-hologram from only a single replica because the replicas of that sub-hologram are further away from each other and therefore less likely to fall within an angular viewing range of the viewing system.

The replicas formed by the waveguide comprise replicas of the light of the display device, wherein the waveguide effectively forms an array of such replicas (in one or more dimensions). Configuring a (first sub-) hologram to occupy only part of the display device may result in some separation being created between adjacent instances of the light of the first sub-hologram, in the replica array formed by the waveguide
The inventors have found that, while underfilling the display device with e.g. the (first sub-) hologram may reduce the risk of unwanted light (ghost light) being received by a viewing system, gaps or dark bands appear in the perceived image. The inventors have found that this reduction in "wanted" light can be recovered without reintroducing the risk of ghost content. In accordance with the present disclosure, the target image may be separated into two or more image sub-portions (or sub-regions). A separate respective sub-hologram corresponding to each image sub-region may be calculated, wherein each sub-hologram is sized so that they can both/all be displayed substantially simultaneously on the display device. Each sub-hologram may be displayed on a respective (contiguous) group of pixels of the display device. Because each sub-hologram occupies only part of the display device, it is ensured that, for each individual sub-hologram, the replicas (formed by the waveguide) of the light of that sub-hologram are physically spaced apart from one another, to avoid the light of more than one such replica reaching the viewer at any given time or viewing position. Conversely, the light of each of the sub-holograms is sufficiently close to at least one instance of the light of (each of) the respective other sub-hologram(s) to enable the viewing system to receive light from each/every sub-hologram, and so to view the entire image, at any given time, from a predetermined viewing location. The inventors found that embodiments are effective because the size of the display device is less than a size (e.g. length or magnitude of a primary dimension such as width or diameter) of an entrance pupil of a viewing system. The group of adjoined sub-holograms of different parts of the field of view may collectively be referred to as the "hologram" that is displayed on the display device. It may therefore be said that, in embodiments, the size of the hologram is less than a size of an entrance pupil of a viewing system.

The sub-holograms may be calculated using any suitable method and can be calculated for a predetermined viewing system configuration and viewer/aperture location. The sub-hologram calculation may account for the viewing system having more than one aperture, such as a viewer having two eyes. Although each individual sub-hologram has fewer hologram pixels than a single hologram displayed across the entire display device would have, the present inventors have found that the resulting loss of image resolution is not significant and that the possible disadvantages of such reduced resolution are outweighed by the benefit of reducing and even eliminating, ghost images. This may be particularly true if each individual sub-hologram comprises at least a quarter of the pixels, for example at least a third or at least a half of the pixels.

According to an aspect, a holographic projector is provided comprising a display device arranged to form a holographic wavefront by spatially modulating light in accordance with a hologram displayed thereon, and a waveguide having an input arranged to receive the holographic wavefront, and a first surface and a second surface arranged to waveguide the holographic wavefront therebetween, wherein the first surface is partially reflective-transmissive such that a plurality of replicas of the holographic wavefront are emitted therefrom. A size of the hologram (or the display device) is less than a size of an entrance pupil of a viewing system for receiving the holographic wavefront from the first surface of the waveguide. The hologram comprises a first sub-hologram of a first region of an image (e.g. first angular sub-range of the field of view). The first sub-hologram may underfill the display device (i.e. use only a subset of pixels of the display device). The hologram may comprise a second sub-hologram of a second region of the image (i.e. a second angular sub-range of the field of view). The first sub-hologram may be adjoined (or abutted or immediately adjacent) to the second sub-hologram. To be clear, the first region of the image is different to the second region of the image. Thus, the first sub-hologram is different to the second sub-hologram. Each of the first and second sub-holograms may underfill the display device. Therefore, ghosts of the second region of the image may be substantially reduced / eliminated at a viewing window for the same reasons that ghosts of the first region of image are substantially reduced / eliminated, as described above in relation to the first region.

The display device may comprise a display area. The display area may be pixelated. The display area may comprise an array of display pixels. A size of a display area, formed by the array of display pixels, may be of a size that is less than or substantially equal to the size of the entrance pupil of the viewing system.

The hologram (as a whole) may be configured to occupy some of or preferably all the display pixels of the array. However, as above, the first sub-hologram of the hologram may underfill the display area. In other words, the first sub-hologram may occupy less than all of the display pixels of the array. In particular, less than half, optionally less than a third, optionally less than a quarter of the display pixels of the array. The display pixels of the array occupied by the first sub-hologram may form one or more first contiguous groups. The second sub-hologram may also occupy less than half, optionally less than a third, optionally less than a quarter of the display pixels of the array. The display pixels of the array occupied by the second sub-hologram may form one or more second contiguous groups. The first and second sub-holograms may each occupy the same number of display pixels, or may each occupy a different respective number of display pixels of the display device.

The viewing system may comprise a human viewer. The entrance pupil (or, "aperture") may comprise the pupil of the viewer's eye. The viewing system may have more than one entrance pupil. The sub-holograms may be calculated to account for multiple apertures.

The holographic projector may be configured to display multiple different holograms (each comprising two or more sub-holograms), corresponding to multiple different respective images, at different respective times.

The hologram (comprising two or more sub-holograms) may be calculated based on predetermined (i.e., known) properties of the holographic projector and/or of the viewing system, such as but not limited to: the type, size and/or shape of the display device; the size, shape and/or configuration of the waveguide including a distance between the waveguide and the display device and/or an orientation of the waveguide relative to the display area of the display device; a location and/or a size and/or a shape of the entrance pupil; a location at which the image is to be formed; whether the image to be viewed is a real image or a virtual image; and whether the system is configured for direct or indirect holography. The hologram (comprising two or more sub-holograms) may be recalculated when the location of the entrance pupil moves, or moves by at least a predetermined distance, away from an initial position.

The holographic projector may comprise a hologram engine arranged to calculate the hologram. The hologram engine may be arranged to compute the first sub-hologram based on a first region of a (target) image. The hologram engine may be arranged to compute the second sub-hologram based on a second region of the (target) image. The hologram engine may be arranged to compute the hologram (for example, the first and /or second sub-hologram) using a Gerchberg-Saxton type algorithm. This advantageously may be an efficient and fast means for calculating the hologram (and may, for example, be faster and more efficient than a point-cloud type hologram calculation method).

The hologram may further comprise a third sub-hologram of a third region of the image, which may be adjoined to at least one of the first or second sub-holograms, and optionally may further comprise a fourth sub-hologram of a fourth region of the image, which may be adjoined to at least one of the first, second or third sub-holograms. Each sub-hologram may be configured to occupy fewer than all of the display pixels of the display device (i.e. to underfill the display device).

The first and second regions of the image may be adjacent one another, to form a substantially continuous image on an image plane. The optional third and / or fourth regions of the image, if present, may be adjacent one another and/or adjacent at least one of the first region or the second region of the image. Alternatively, there may be a gap between at least one region of the image and at least one respective other region of the image.

The hologram may be configured so that light that is spatially modulated by each of (i.e., all) the sub-holograms will enter the entrance pupil of the viewing system substantially simultaneously, when the display device displaying the hologram is suitably illuminated. The hologram may further be configured so that only one instance of the light that is spatially modulated by a specific one of the sub-holograms will enter the entrance pupil of the viewing system at a given time for a specified location of the entrance pupil (i.e. the viewing system will receive a "main" image and will not receive a second or ghost version of that image).

The holographic projector may further comprise an illumination system arranged to illuminate the hologram displayed on the display device, to form a holographic wavefront. The illumination system may comprise a source of collimated light. The illumination system may further comprise one or more lenses. The illumination system may comprise a laser source such as a laser diode.

The size (i.e., the diameter) of the entrance pupil may be no more than 15 mm such as no more than 12 mm or 10 mm. For example, a diameter of the entrance pupil may be between approximately 8mm and approximately 20mm. The entrance pupil may comprise a pupil of a human eye or an aperture of a camera or other mechanical viewing system. The entrance pupil may be circular in cross section or may be another shape such as, but not limited to, oval or elliptical or square or rectangular in cross section. The size and/or shape of the entrance pupil may be dynamically variable. There may be more than one entrance pupil.

The holographic wavefront formed by the display device may comprise a first holographic sub-wavefront, formed by the first sub-hologram, and a second, different, holographic sub-wavefront, formed by the second sub-hologram. The waveguide may be configured to form an extended modulator (which may be referred to as being a "virtual surface" or a "replica surface") comprising a plurality of replicas of the holographic wavefront formed by the display device, arranged in an array, wherein the array comprises at least one replica of the first holographic sub-wavefront, alternated with at least one replica of the second holographic sub-wavefront. In other words, each instance (or sub-replica) of the light of the first holographic sub-wavefront may be spaced apart from each of the respective others, in one or more dimensions, within the extended modulator. Each instance (or sub-replica) of the light of the second holographic sub-wavefront may occupy a space between respective instances/sub-replicas of the first holographic sub-wavefront, to form the extended modulator.

The image may be formed at a non-infinite image distance, from the display device. In other words, it may be a "near-field" image. The non-infinite image distance may be 5 meters or less, optionally 3 meters or less. It may be a real image or a virtual image. It may be formed by direct-view holography, in which light encoded by the hologram travels to the viewer's eyes. Alternatively, the image may be formed by indirect-view holography, in which light encoded by the hologram is transformed into a holographic reconstruction upstream of the viewer, for example in free space or on a surface such as a screen or a diffuser, and light of the holographic reconstruction travels to the viewer's eyes.

According to an aspect, a method is provided of calculating a hologram for a holographic projection system comprising a display device configured to display a hologram and output a holographic wavefront when illuminated, and a waveguide arranged to receive the holographic wavefront and emit a plurality of replicas of the holographic wavefront. The method comprises obtaining a target image, for which a hologram is to be generated, obtaining a location of an entrance pupil of a viewing system that is to view a holographic reconstruction of the target image, splitting the target image into a first image region and a second image region, and generating a first sub-hologram corresponding to the first image region and a second sub-hologram corresponding to the second image region.

The hologram may be formed by displaying the first and second sub-holograms substantially simultaneously on a common display device. The first sub-hologram may be displayed on a first portion of the display device, for example on a first portion of a display area of the display device. The display device may be pixelated. The display area may comprise an array of display pixels. The first sub-hologram may be displayed on a first subset of the display pixels. The second sub-hologram may be displayed on a second portion of the display device. The second portion of the display device may be different to the first portion of the display device. The first sub-hologram may be displayed on a second subset of the display pixels. The first and second portion of the display device may be adjoined to a second sub-hologram , when displayed on the display device.

According to an aspect, a hologram engine is provided, configured to perform a method of calculating a hologram according to the above aspect. The hologram engine may comprise or be comprised within any suitable controller, computer or processor. It may be integral to, or separate to but in communication with, a holographic projector according to an above aspect.

According to an aspect, a method of holographic projection is provided comprising displaying a hologram on a display device, illuminating the displayed hologram, to form a holographic wavefront and directing the holographic wavefront through a waveguide. The waveguide comprises an input arranged to receive the holographic wavefront and a first and second surface arranged to waveguide the holographic wavefront therebetween, wherein the first surface is partially reflective-transmissive such that a plurality of replicas of the holographic wavefront are emitted therefrom. A size of the hologram is less than a size of an entrance pupil of a viewing system for receiving the holographic wavefront from the first surface of the waveguide. The hologram comprises a first sub-hologram of a first region of an image adjoined to a second sub-hologram of a second region of the image.

The method may comprise, as an initial step, calculating the hologram for viewing of the image by the viewing system.

The method according to any of the aspects herein may be at least partially computer implemented. It may be automated or semi-automated.

Features and advantages disclosed in relation to one aspect may be applicable to the other aspects. In particular, features and advantages disclosed in relation to the holographic projector may be applicable to the method of calculating a hologram, and vice versa.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6A shows an extended modulator formed by a waveguide that guides light from a display device;
Figure 6B shows an extended modulator formed by a waveguide that guides light from a display device , which displays first and second interlaced sub-holograms;
Figure 6C shows an extended modulator formed by a waveguide that guides light from a display device , which displays first, second, third and fourth interlaced sub-holograms;
Figure 7 shows the waveguide of Figure 6B and replicas of the display device, as formed by said waveguide; and
Figure 8 shows an example image being formed from replicas of the two sub-holograms of Figure 6B.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

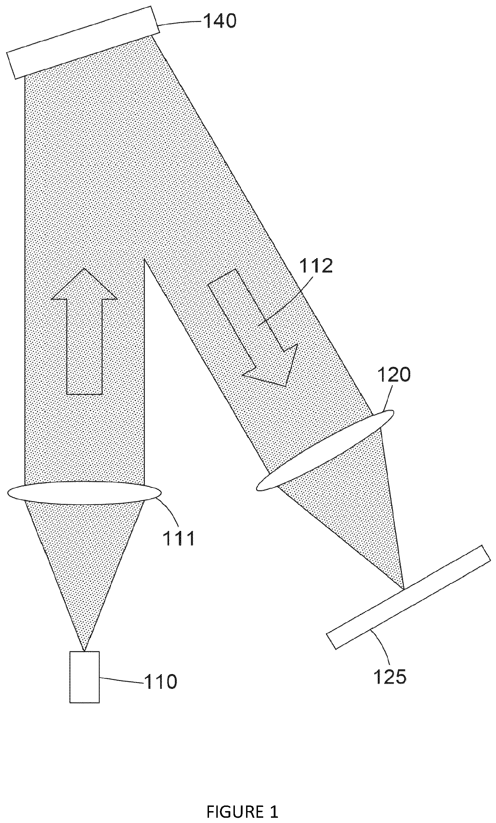

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform. In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field.

In some embodiments, this is achieved during hologram calculation by considering an aperture (virtual or real) of the optical system, as described above.

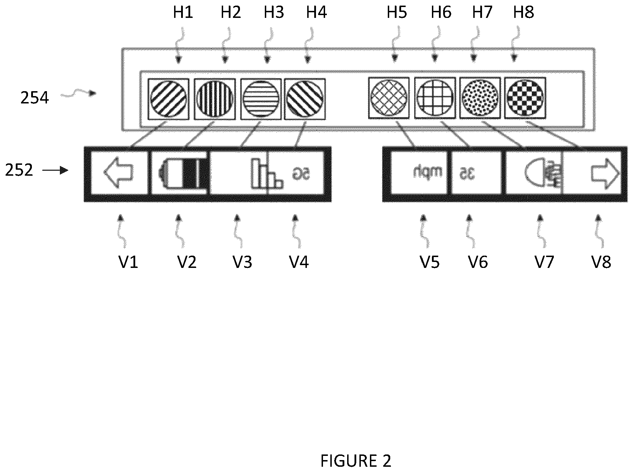

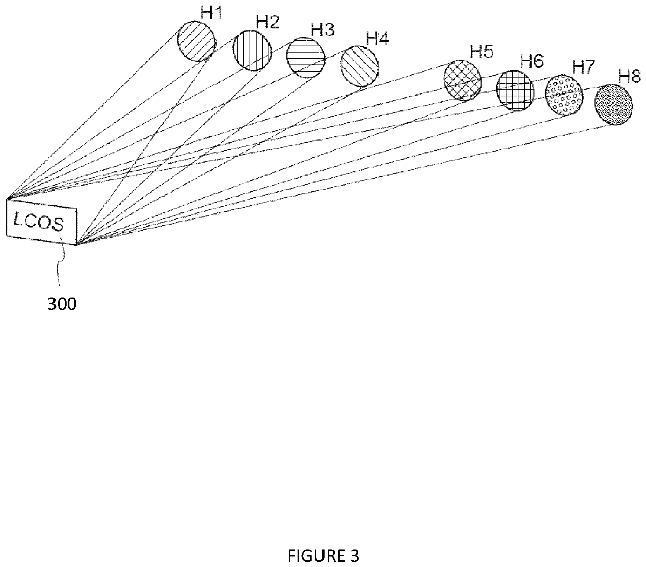

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

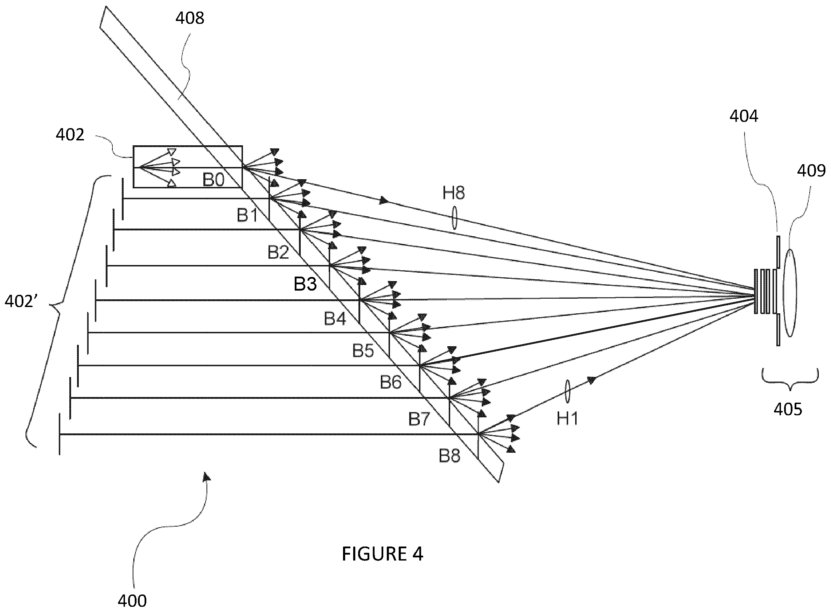

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

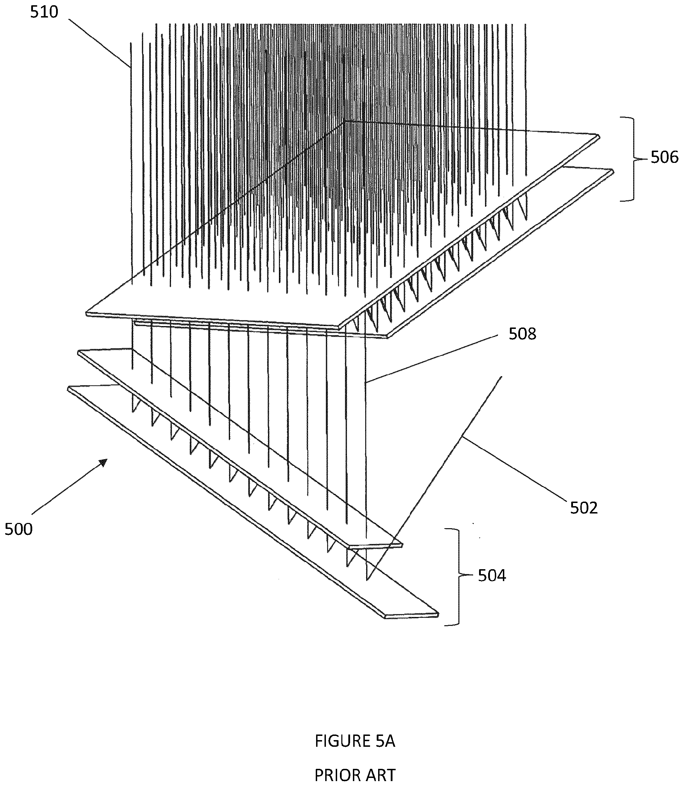

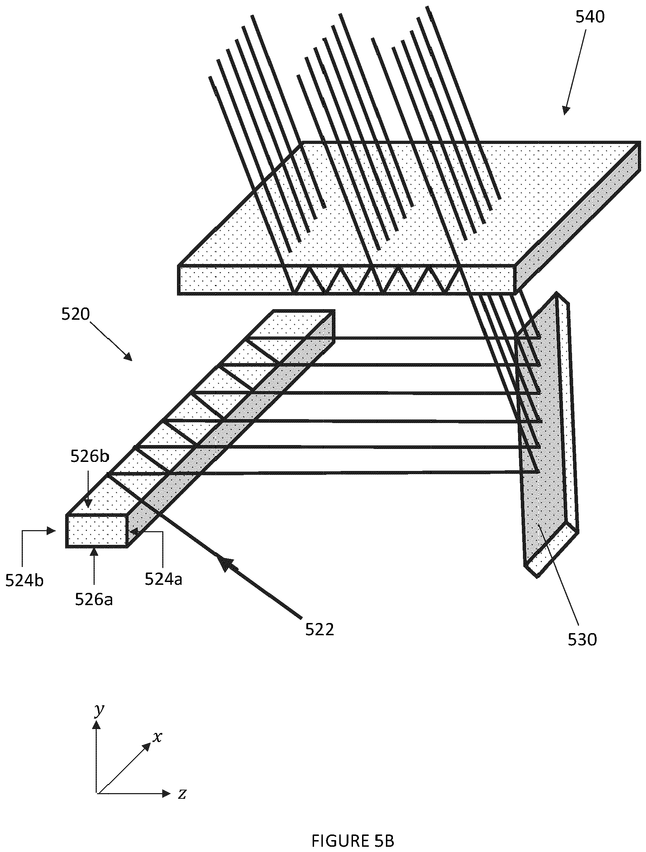

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the deliver of hologram light channels, and their replicas, to the eye-box. Each aperture or window may comprise a plurality of liquid crystal cells or pixels.

### Ghost Images

Whilst a waveguide can be used in image projection systems to enable all angular content from the display device to be received by the eye, even at relatively large projection distances, and to enable some lateral movement of the eye within an eye-box, the present inventors have observed that, for a non-infinite virtual image distance - that is, nearfield virtual images - so-called 'ghost images' can appear owing to the different possible light propagation paths through the waveguide, and due to the light propagation paths of different replicas of a holographic wavefront having different respective lengths. A ghost image is a lower intensity replica of a main image. The main, highest intensity image may be referred to as the primary image. Each ghost image may be referred to as a secondary image. The presence of ghost images can significantly reduce the quality of a perceived virtual image. The ghost images may give the appearance of blurring of the primary image. Ghost images may even be a safety concern, in arrangements in which safety-critical information is being conveyed by the image. The present disclosure relates, at least in part, to addressing problems caused by the ghost images, by an improved technique for calculating a hologram, for display on a display device that is to be replicated by a waveguide, to reduce and preferably to avoid ghost images in the resulting images.

Conventionally, when a hologram is calculated of a (target) image, and displayed on a display device, each (i.e., every) hologram pixel will contribute to the whole image (i.e., to every part of the holographic reconstruction.) It is conventionally considered desirable - for the purposes of, for example, hologram robustness and image resolution - to display a hologram across as many display pixels of the display device as possible. In arrangements in which there are more display pixels in the display device than there are hologram pixels of the hologram to be displayed, tiling may be adopted, in which at least one hologram pixel of the hologram is displayed more than once, at a given time, on the display pixels of the display device.

As indicated earlier in the present disclosure, one approach to addressing ghost images is described in British patent application 2101666.2, filed 5 February 2021 and incorporated herein by reference, which discloses a first hologram calculation method, in which eye-tracking and ray tracing are used to identify a subarea of the display device for calculation of a point cloud hologram that contribute ghost images. The hologram values are then excluded from this sub-area (or sub-areas) of the display device to reduce or eliminate ghosts. However, this approach may not be compatible with all image projection systems because it reduces the number of display device pixels that are available for hologram display - and so potentially reduces the number of hologram pixels that can be comprised in the hologram of an target image - and so may lead to a reduction in image resolution. It can also be computationally expensive, and time consuming, which may render it less suitable for complex target images.

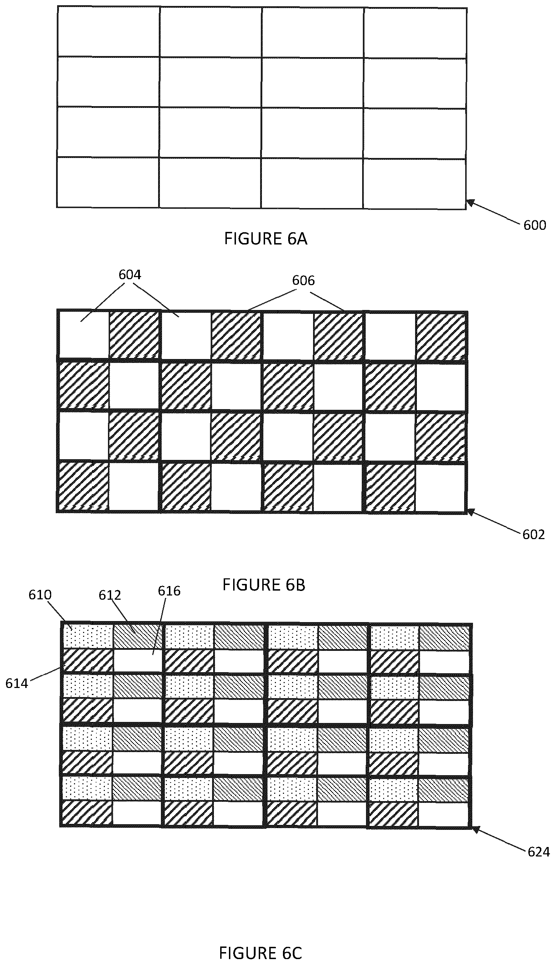

The present inventors have proposed a new solution to ghost images, which can be understood from the following description of Figures 6A *et seq.*

Figure 6A shows an example extended modulator 600 that is formed when a waveguide (not shown) receives and replicates light from a display device, which, for example, may be a spatial light modulator (SLM) such as a Liquid Crystal on Silicon (LCoS) SLM. The extended modulator 600 comprises an array of replicas of the light of the LCoS. The extended modulator 600 appears in Figure 6A as being two-dimensional but it may also have depth in a third, orthogonal dimension (I.e., in the "z" direction). In this example there are 16 replicas in the extended modulator 600, but this is merely illustrative and should not be regarded as limiting with respect to the present disclosure. The LCoS that is being replicated by the waveguide, to form the extended modulator 600 may display any suitable pattern. For example, it may display a diffractive structure such as a hologram, which can be suitably illuminated to form an image (i.e., a holographic reconstruction). As will be understood from the description above, conventionally a hologram of an image would preferably be displayed across the whole display device (i.e., using every display pixel, or as many display pixels as possible) and every hologram pixel displayed would contribute to the whole of the resulting image, when the hologram was displayed and suitably illuminated.

The present inventors have recognised however, that when a waveguide or other replicator is used in an image projection system, in conjunction with a display device such as an LCoS, the creation of one or more replicas of the light output by a displayed, illuminated hologram on the display device (I.e., the creation of an extended modulator 600 such as that shown in Figure 6A) can lead to light of the same image content reaching the viewer's eyes more than once, via different respective replicas (and from different areas of the LCOS). This, in turn, leads to the viewer seeing one or more "ghost images" in addition to the main (primary) image, which is generally undesirable.

The present inventors have further recognised that the problem of ghost images for near-field images can be exacerbated when the size of the display device and the size of the aperture via which the viewer is receiving the light content are similar to one another. For example, it may be worsened when the display device (e.g., an LCoS) is of a similar size to that of a human eye. The problem of ghost images also appears worse as the virtual image distance (VID) - i.e., the distance between the viewer and the image - decreases. It will be appreciated that, in practical terms, it is often not desirable - and may not even be possible - to change the relative size of the display device and the aperture (e.g., the eye), nor to significantly change the VID. For example, in many arrangements such as, but not limited to, head-up displays that are housed at least partially under a dashboard in a vehicle, the available volume of space for housing an image projection system and/or the degree of freedom of choice for its location and/or the degree of freedom of choice for the location at which an image should be formed is/are limited, and so another approaching for addressing ghost images is required.

One solution for addressing ghost images, as proposed by the present inventors, is to reduce the number of display pixels across which a hologram is displayed - for example, only displaying the hologram across one half or one third or one quarter of the display pixels of the display device. In other words, the hologram underfills the display device. Doing so enables the replicas of the light of the hologram - as created by a waveguide in an image projection system - to be spaced apart from one another. A separation between replicas of the (sub) hologram is introduced. This reduces (or eliminates) the likelihood of the light of more than one replica reaching a viewer's eye from any given viewing position, and so reduces the likelihood of ghost images.

The inventors have found that, while underfilling the display device with e.g. the (first sub-) hologram may reduce the risk of unwanted light (ghost light) being received by a viewing system, gaps or dark bands appear in the perceived image where unused pixels of the display device are no longer delivering image/hologram content to the eye. The inventors have found that this reduction in "wanted" light can be recovered without reintroducing the risk of ghost content. In accordance with the present disclosure, the target image may be separated into two or more image sub-portions (or sub-regions). A separate respective sub-hologram corresponding to each image sub-region may be calculated, wherein each sub-hologram is sized so that they can both/all be displayed substantially simultaneously on the display device. Each sub-hologram may be displayed on a respective (contiguous) group of pixels of the display device. Because each sub-hologram occupies only part of the display device, it is ensured that, for each individual sub-hologram, the replicas (formed by the waveguide) of the light of that sub-hologram are physically spaced apart from one another, to avoid the light of more than one such replica reaching the viewer, at any given time. Conversely, the light of each of the sub-holograms is sufficiently close to at least one instance of the light of (each of) the respective other sub-hologram(s) to enable the viewing system to receive light from each/every sub-hologram, and so to view the entire image, at any given time, from a predetermined viewing location. The inventors found that embodiments are effective because the size of the display device is less than a size (e.g. length or magnitude of a primary dimension such as width or diameter) of an entrance pupil of a viewing system. The group of adjoined sub-holograms of different parts of the field of view may collectively be referred to as the "hologram" that is displayed on the display device. It may therefore be said that, in embodiments, the size of the hologram is less than a size of an entrance pupil of a viewing system.

Figure 6B illustrates an improved solution for addressing ghost images in near-field images, as proposed by the present inventors. Figure 6B shows an example extended modulator 602 that is formed when a waveguide (not shown) receives and replicates light from a display device, which, for example, may be a spatial light modulator (SLM) such as a Liquid Crystal on Silicon (LCoS) SLM. As in Figure 6A, the extended modulator 602 appears in Figure 6B as being two-dimensional but it may also have depth in a third, orthogonal dimension (I.e., in the "z" direction). In this example there are 16 replicas in the extended modulator 602, but this is merely illustrative and should not be regarded as limiting with respect to the present disclosure. The replicas are shown as being divided by one another by the thicker grid lines in Figure 6B.

The extended modulator comprises replicas of the light of a display device 602 that has been configured to display two holograms substantially simultaneously - i.e., a first (sub-) hologram 604 (illustrated by the white portion of each replica in Figure 6B) and a second (sub-) hologram 606 (illustrated by the shaded portion of each replica in Figure 6B), at substantially the same time as one another, side-by-side on the same (I.e., on a common) LCoS. The first and second (sub) holograms 604, 606 may also be referred to as first and second sub-holograms, respectively. Each (sub) hologram 604, 606, comprises a respective group of hologram pixels, displayed on a respective contiguous group of display pixels of the LCoS. Moreover, in accordance with the solution proposed by the present inventors - the first 604 and second 606 (sub-) holograms correspond, respectively, to first and second portions of the same target image (i.e., to first and second respective portions, or parts, of a common holographic reconstruction that will be seen/formed by the viewer's eye, at a given time.) Each of the first 604 and second 606 (sub-) holograms has fewer hologram pixels than the number of display pixels of the display device 602. In this example, the first 604 and second 606 holograms each occupy a respective half of the LCoS, but this is merely illustrative and should not be regarded as limiting with respect to the present disclosure.

Each of the first 604 and second 606 holograms may be regarded as being a "sub-hologram", since each one corresponds to a respective sub-part of the target image that is to be holographically reconstructed. It should be noted that this is different to the arrangement shown and described in relation to Figure 3 hereabove. In the arrangement of Figure 3, a single hologram is configured so that, when suitably displayed and illuminated on a display device, it causes the light of different respective parts of the image to be output in respective corresponding channels (H1 to H8). However, as can be seen from Figure 3, every hologram pixel (and, so, every display pixel of the display device) in that arrangement contributes light to each of (i.e., all of) the channels, and so contributes to every part of the resulting image. On the other hand, in the solution shown in Figure 6B, the hologram pixels of the first (sub-)hologram 604 occupy just half of the pixels of the LCoS and also contribute light of a corresponding first (sub-)part of the image, whereas the hologram pixels of the second (sub-)hologram 606 occupy the respective other half of the pixels of the LCoS and contribute light of a corresponding second (sub-)part of the image.

Each replica in Figure 6B therefore comprises light of the first sub-hologram 604, side-by-side with light of the second hologram 606. As a result, in the extended modulator 602, which replicates light of the entire LCoS in each of two dimensions, each instance of the light of the first sub-hologram 604 is separated by a respective next instance of the light of the first sub-hologram 604, by an instance of light of the second sub-hologram 606. In other words, in each of its two dimensions, the extended modulator 602 effectively comprises multiple replicas of the light of the first sub-hologram 604, alternated with multiple replicas of the light of the second (sub-)hologram 606. This means that two instances/replicas of the light of the same (sub-)hologram are never located directly adjacent one another. The present inventors have recognised that this separation/alternation helps to address the issue of ghost images as the chances of a viewing system receiving light from different replicas associated with the same (sub-) hologram is significantly reduced.

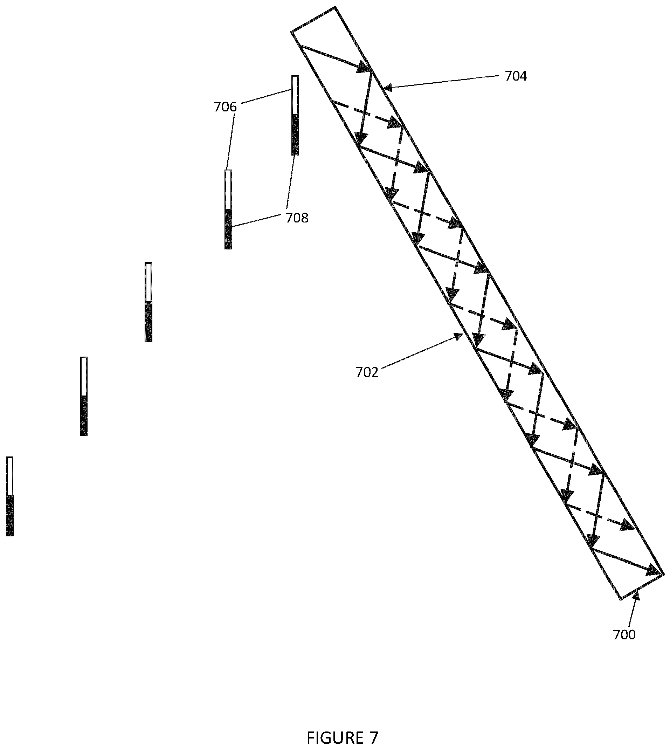

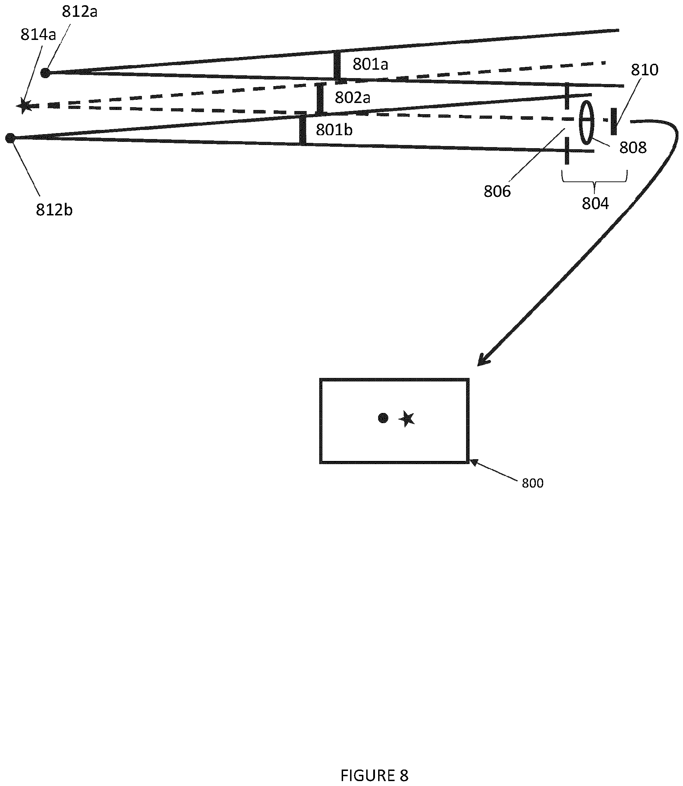

It should be noted that, for each (sub-)hologram, all the pixels of that (sub-)hologram contribute to all the image pixels of the corresponding sub-portion of the image. Moreover, the holographic light output by the first (sub-)hologram will be output side-by-side with the holographic light output by the second (sub-)hologram, in the angular space on the output side of the waveguide 700. This will be understood further from the description of Figures 7 and 8, below. Moreover, the example of Figure 6B comprises an extended modulator 602 that replicas an LCoS displaying two sub-holograms, however the approach described herein can be extended to any suitable display device displaying two or more than two holograms. This is discussed further below in relation to Figure 6C.

Turning to Figure 7, a waveguide 700 is shown, comprising a first, reflective surface 702 and a second, transmissive-reflective surface 704. Although not shown in Figure 7, it will be appreciated that, at each "bounce point" at which the holographic light within the waveguide 700 hits the second surface 704, some light will be transmitted out of the waveguide 700, towards the viewer (not shown) and the remainder of the light will be reflected towards the first surface 702, as illustrated by the arrows in Figure 7.

Referring again briefly to Figure 4 herein, it will be recalled that a waveguide in an image projection system is, configurable to produce (from the viewer's perspective) a plurality of replicas of a display device (in the example of Figure 4, an LCoS), at different respective locations, upstream of the waveguide 700. This has the effect of increasing the volume of the eye-box, within which a viewer can be located and still see an image corresponding to the illuminated hologram displayed on the LcoS. However, as already described herein, the presence of such replicas can conventionally lead to the formation of ghost images for the viewer.

Figure 7 shows a waveguide 700 that is arranged to guide light emitted by a display device (not shown in Figure 7) with two different sub-holograms displayed thereon, side-by-side with one another, wherein each sub-hologram corresponds to a respective sub-portion of a target image that is to be holographically reconstructed. The portions of the display device on which the respective sub-holograms are displayed may be referred to as being first and second respective sub-display devices. Because the two (sub-)holograms are displayed on the display device at the same time, the waveguide 700 has the effect (from the viewer's perspective) of creating two types of sub-replica 706, 708 within each replica of the display device. Each instance of the first sub-replica type 706 is a replica of the light of the first sub-hologram 604 (or, of the first sub-display device) and is illustrated by a white portion of each replica. Each instance of the second sub-replica type 708 is a replica of the second sub-hologram 606 and is illustrated by a solid/dark portion of each replica. The light of each sub-replica type 706, 708 is guided separately within the waveguide 700, with the guidance following the same pattern for each sub-replica type, but with the wavefronts of the two respective types being spatially offset from one another. As a result, the bounce points for light of the first sub-replica type 706 - and, so, the locations at which light of the first (sub-) hologram will be emitted from the waveguide 700 - are displaced from, and alternated with, the bounce points for light of the second sub-replica type 708, on the second surface 704 of the waveguide 700. Therefore, the two types of sub-replica 706, 708 create respective light cones that are alternated with one another in space, downstream of the waveguide 700. Instances of the first sub-replica type 706 are spatially separated from other instances of the first sub-replica type at least by instances of the second sub-replica type 708 (as shown in Figure 6B). This reduces the possibility of two light cones of the same (sub) type overlapping with one another, whilst still allowing light cones of two different (sub-) types to overlap with one another, at the aperture of a viewing system located downstream of the waveguide, particularly at relatively short viewing distances. Therefore, a viewer is likely to receive light of both sub-holograms, and therefore receive enough light to form/see the entire target image, but is much less likely to receive more than one instance of the light of a single sub-hologram, thereby reducing the risk of ghost images being formed.

It should be noted that in Figure 7, the wavefronts enter the waveguide 700 via the first surface 702, but this is illustrative only. In other embodiments, the wavefronts may instead enter the waveguide 700 from the second, transmissive-reflective surface 704.

The present inventors have thus recognised that, if the two (sub-) holograms displayed substantially simultaneously on a display device correspond to two different respective portions of a common (i.e., of the same) target image, and if they are displayed on respective contiguous groups of the display pixels of the display device, and illuminated so that the light of the first (sub-)hologram is alternated, and overlaps in angular space, with light of the second, different (sub-)hologram, when a waveguide is positioned between the display device and the viewer, the occurrence of ghost images in the image seen by the viewer can be reduced and even, in at least some arrangements, eliminated, without the formation of dark bands. This is particularly the case when the display device on which the holograms are displayed is of a similar physical size to, or smaller than, the aperture via which the images are seen (e.g., is similar in size to the human eye) and/or when the images are near-field images. The reason for this - as recognised by the present inventors - is that, for any given position of the aperture (e.g., the viewer's eye) within the eye-box, it is not physically possible (or, is at least much less likely) for two instances of light of the same hologram to enter the aperture, at the same time. In other words, a first instance of the light of the first (sub-)hologram is too far away from the next-nearest instance(s) of the light of that first hologram for both instances of that first light to enter the aperture at the same time.

It is noted that the two sub-holograms are described in relation to Figures 6B and 7 as being "side-by-side", indicating that they are directly adjacent one another. This is not essential. In some cases, there may be a separation, or gap, between the holograms when displayed on the display device. Moreover, they may not each have the same number of hologram pixels. They may not each occupy the same number of display pixels on the display device. The two sub-holograms may not correspond to equally-sized sub-portions of the target image. The two sub-portions of the image may be directly adjacent/abutting one another or there may be a gap between them, on an image plane. As mentioned above, there may be more than two holograms displayed substantially simultaneously, corresponding to more than two respective image sub-portions.

Figure 8 shows an example of a simple image - comprising a "circle" and a "star" - being seen by a viewer, without ghost images, using a holographic projection system of the type shown and described above in relation to Figures 6B and 7. It will be appreciated that a simple image, with just two distinct components, has been selected for Figure 8 for the purposes of illustration only. In practice, the approach described herein can be used for more complex images including (but not limited to) images in which the two image sub-portions, which correspond respectively to the first and second sub-holograms, are directly adjacent and abutting one another on the image plane, to form a continuous image. Moreover, and as will be described further below, there may be more than two image sub-portions and therefore more than two respective corresponding sub-holograms displayed on a display device at a given time, in accordance with the approaches described herein.

Figure 8 shows an image 800 that is seen by a viewer's eye 804, which comprises a pupil 806 (i.e., an aperture 806), a lens 808 and a retina 810 (i.e., an image plane). In this example, the image seen is a virtual image - i.e., it is seen by the viewer as being upstream of the display device, but the present disclosure is applicable to both real and virtual images. The system in Figure 8 is set up for direct-view holography, in which light encoded with the holograms is directed to the eye 804, so that the image is formed by the viewer. But the present disclosure is also applicable to indirect-view holography, in which light encoded by the holograms is transformed to form an image upstream of the viewer, either in free space or on a surface such as a screen or a diffuser, and the light of that image is conveyed to the viewer.

In Figure 8, two sub-holograms are displayed on a display device such as an LCoS - which is not shown in Figure 8 but is configured to display the two sub-holograms as described baove in relation to Figures 6B and 7. The first sub-hologram corresponds to the "circle" image content and the second sub-hologram corresponds to the "star" image content. The display device, although not shown, is in the vicinity of the plurality of replicas (801a, 802a, 801b) that are shown in Figure 8. There is also a waveguide (not shown) in the system located between the display device and the viewer and arranged to produce a plurality of replicas as already described herein.

Figure 8 shows three replicas that are formed of the display device, by the waveguide, and the corresponding image content 812a, 814a, 812b that would be seen by the viewer, if they received light of each of the three respective replicas 801a, 802a, 801b. Figure 8 only shows three instances of replicas but in practice there will usually be more.

The first replica 801a is a replica of the light of the first sub-hologram on the display device (not shown). Therefore, light from the first replica 801a would lead to the viewer seeing image content 812a comprising the circle, if they received light of the first replica 801a. The third replica 801b is also a replica of the first sub-hologram on the display device and so would lead to the viewer seeing image content 812b comprising the circle, if they received light of the third replica 801b. Conversely, the second replica 802a is a replica of the second sub-hologram on the display device (not shown). Therefore, light from the second replica 802a would lead to the viewer seeing image content 814a comprising the star, if they received light of the second replica 802a.

The arrangement of Figure 8 is configured so that, at the plane at which the aperture 806 is located, the light cone of the second replica 802a overlaps in angular space with the respective light cones of each of the first 801a and third 801b replicas. However, the light cones of the first 801a and third 801b replicas do not overlap with one another. As a result, the viewer will not simultaneously receive more than one instance of either portion of the image content. Instead, if the eye is situated within the eye-box, for example at the location of the eye 804 shown, the viewer receives one instance of light corresponding to the circle image content and one instance of the light corresponding to the star image content. As a result, the viewer will see the whole image intended for them to view - i.e., one circle and one star, side-by-side - without any duplication of image content and so without any ghost images of either portion of the image content being formed. Moreover, it is possible for the eye to laterally move within the eye box, at least along the plane at which the aperture 806 is located, to a plurality of different positions and to still receive both sets of image content without any overlap, as will be appreciated from Figure 8.

It is noted that Figure 8 shows a single eye, for simplicity of illustration. However, the concepts described herein, including the calculation of the sub-holograms, which is described further below, can be extended to scenarios in which there are multiple apertures - most commonly, but not limited to, to scenarios in which the light is to be received by two eyes of a viewer.

Although the examples described thus far in the present disclosure comprise two sub-holograms, displayed substantially simultaneously on a display device, the concepts described herein can be extended to more than two sub-holograms, for example (but not limited to) three or four or more sub-holograms, displayed substantially simultaneously on a display device. Regardless of how many sub-holograms are used, they can be configured so that the corresponding holographic reconstructions (i.e., sub-images) combine to form a single target image, to be viewed by a viewer without (or with fewer) ghost images than are conventionally seen.

Figure 6C shows an example in which four sub-holograms - the first 608 illustrated by a white rectangle, the second 610 illustrated by dots, the third 612 illustrated by fine left-to-right downwardly sloping lines and the fourth 614 illustrated by bold left-to-right upwardly sloping lines - are displayed substantially simultaneously on a display device. The display device has been replicated by a waveguide to form an extended modulator 624, of a similar type to those shown in Figures 6A and 6B. Again, it has 16 replicas merely by way of illustration and the present disclosure is not limited to that numerical example. The four sub-holograms 608, 610, 612, 614 each occupy a quarter of the display device and are arranged in a grid formation, with each sub-hologram occupying a respective corner of the display device, and being adjacent to one respective other sub-hologram in each of two dimensions, with all four sub-holograms meeting at a midpoint of the display device. a. Each sub-hologram corresponds to a respective quarter of the target image. That is; the first sub-hologram 608 corresponds to a first quarter of the target image, the second sub-hologram 610 corresponds to a second quarter of the target image, and so on.

The extended modulator 604 comprises replicas, in each of two dimensions, of the light of the entire display device. Therefore, for each sub-hologram 608, 610, 612, 614, the respective instances of light of that sub-hologram, within the extended modulator 624, are not adjacent to one another but are spaced apart from one another by an instance of the light of a respective other sub-hologram, in each of the two dimensions of the display device 6161. The sub-holograms 608, 610, 612, 614 are configured, for a particular holographic projection system that includes a waveguide or other replicator, and for a predetermined viewer/aperture location, so that the light cones of each of the four different sub-holograms 608, 610, 612, 614 will all enter the viewer's eye, in order to provide all the light for the required image content. However, two or more replicas of the light of the same sub-hologram should not enter the viewer's eye at the same time, for that predetermined viewer/aperture location. Thus, the viewer will be able to see the whole image, without ghost images being present. It is noted that the light cones of two or more replicas of the same sub-hologram might overlap at another point in space, outside the eye-box (i.e., away from the predetermined viewer's eye position). Such an overlap will not create ghosts, from the viewer's perspective, as the viewer's eye(s) will not be receiving more than one instance of each light cone, from each of the respective sub-holograms.

A display device that is replicated to form an extended modulator as described herein can be configured to display a single hologram, or any plural number of holograms or sub-holograms, at a given respective time. The number of holograms or sub-holograms that it displays may change dynamically, such as between immediately successive image frames. At least in some arrangements, the display of multiple sub-holograms may be combined with tiling of at least one of those sub-holograms. Moreover, one or more of the sub-holograms may be displayed in conjunction with another diffractive structure such as a grating or a software lens.

The (sub-)holograms can be calculated for a target image, for a predetermined image projection system, in which variables such as (but not limited to) the configuration of the waveguide, the type, size and shape of the display device, and the viewer/aperture location are known. This can be done using any suitable hologram calculation method, using any suitable controller or processor (which may be referred to as being a "hologram engine"). For example, the sub-holograms may be calculated using a Gerchberg-Saxton type method, or a point-cloud type method, or any other suitable hologram calculation technique. Such methods may be carried out quickly and efficiently, such that they can be repeated in quick succession for different target images and/or for different respective viewer locations and eye-box sizes/locations. For example, a Gerchberg-Saxton Fidoc method may be used, which is quick and highly efficient, whilst still maintaining good image quality.

As detailed above, each sub-hologram can be configured to produce a unique corresponding sub-image (or, sub-target), which is a sub-portion of a whole target image. The respective sub-images may directly abut one another, to form continuous image content, or a sub-image may be spaced apart from at least some of the respective others on the image plane. The location (or, the centrepoint) of each sub-image on the image plane will (usually) be different to the location/centrepoint of each of the respective other sub-images. The method can comprise calibration of the angular content for each sub-image, wherein such calibration should be repeated for different respective eye-box positions. However, the calibration can be implemented at a high level, which will consider various possible systematic errors such as waveguide misalignment, such that for each image system the calibration needs to only be done once, for each respective eye-box position.

It will be appreciated that each sub-hologram, which is displayed on only some of the display pixels of a display device, has fewer hologram pixels than is possible for a single "whole" hologram that can be displayed across all the display pixels. In theory, therefore, it might be expected that the sub-holograms produce sub-images that are of lower resolution, as compared to the resolution of an image formed from a single whole hologram. However, the present inventors have found that, in practice, splitting a hologram into multiple sub-holograms - such as, but not limited to, 2 or 3 or 4 sub-holograms -as described herein does not significantly sacrifice image quality. Therefore, this approach is net beneficial as it successfully reduces and often eliminates the presence of ghost images, whilst still producing high quality images. Therefore, the viewer can see the images more clearly and thus more safely than is possible using conventional approaches. This is achieved in a compact and computationally non-burdensome manner, which can be implemented both in new and in pre-existing image projection systems. The methods described herein can be carried out quickly, so that target images can be changed, and those different respective target images can be displayed in sequence without the viewer experiencing lag or delay.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A holographic projector comprising:
a display device arranged to form a holographic wavefront by spatially modulating light in accordance with a hologram displayed thereon;
a waveguide having: an input arranged to receive the holographic wavefront; and a first surface and a second surface arranged to waveguide the holographic wavefront therebetween, wherein the first surface is partially reflective-transmissive such that a plurality of replicas of the holographic wavefront are emitted therefrom;
wherein a size of the hologram is less than a size of an entrance pupil of a viewing system for receiving the holographic wavefront from the first surface of the waveguide and the hologram comprises a first sub-hologram of a first region of an image adjoined to a second sub-hologram of a second region of the image.

2. A holographic projector as claimed in claim 1 wherein the hologram further comprises a third sub-hologram of a third region of the image, adjoined to at least one of the first or second sub-holograms, and optionally wherein the hologram further comprises a fourth sub-hologram of a fourth region of the image, adjoined to at least one of the first, second or third sub-holograms.

3. A holographic projector as claimed in any preceding claim wherein the first and second regions of the image are adjacent one another, to form a substantially continuous image on an image plane.

4. A holographic projector as claimed in any preceding claim wherein the hologram is configured so that light that is spatially modulated by each of the sub-holograms will enter the entrance pupil of the viewing system substantially simultaneously, when the display device displaying the hologram is illuminated.

5. A holographic projector as claimed in any preceding claim, further comprising:
an illumination system arranged to illuminate the hologram displayed on the display device, to form a holographic wavefront.

6. A holographic projector as claimed in any preceding claim wherein the size of the entrance pupil is no more than 15 mm such as no more than 12 mm or no more than 10 mm.

7. A holographic projector as claimed in any preceding claim in which the holographic wavefront formed by the display device comprises a first holographic sub-wavefront, formed by the first sub-hologram, and a second, different, holographic sub-wavefront, formed by the second sub-hologram.

8. A holographic projector as claimed in claim 7 wherein the waveguide is configured to form an extended modulator comprising a plurality of replicas of the holographic wavefront formed by the display device, arranged in an array, wherein the array comprises at least one replica of the first holographic sub-wavefront, alternated with at least one replica of the second holographic sub-wavefront.

9. A holographic projector as claimed in any preceding claim wherein the image is formed at a non-infinite image distance, from the display device.

10. A method of calculating a hologram for a holographic projection system comprising a display device configured to display a hologram and output a holographic wavefront when illuminated, and a waveguide arranged to receive the holographic wavefront and emit a plurality of replicas of the holographic wavefront, the method comprising:
obtaining a target image, for which a hologram is to be generated;
splitting the target image into a first image region and a second image region; and
generating a first sub-hologram corresponding to the first image region and a second sub-hologram corresponding to the second image region.

11. A method of holographic projection comprising:
displaying a hologram on a display device, the hologram comprising a first sub-hologram of a first region of an image adjoined to a second sub-hologram of a second region of the image;
illuminating the displayed hologram, to form a holographic wavefront;
directing the holographic wavefront through a waveguide;
wherein the waveguide comprises an input arranged to receive the holographic wavefront; and a first and second surface arranged to waveguide the holographic wavefront therebetween, wherein the first surface is partially reflective-transmissive such that a plurality of replicas of the holographic wavefront are emitted therefrom;
wherein a size of the hologram is less than a size of an entrance pupil of a viewing system for receiving the holographic wavefront from the first surface of the waveguide.

12. The method of claim 11 comprising, as an initial step, calculating the sub-holograms for viewing of the image by the viewing system.

13. The method of any of claims 11 or 12, wherein said method is at least partially computer implemented.
